(19) Europäisches Patentamt

European Patent Office

Office européen des brevets

(11) **EP 1 428 306 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(21) Anmeldenummer: **02767416.7**

(22) Anmeldetag: **21.08.2002**

(51) Int Cl.:
*H02K 21/16* (2006.01)     *H02K 1/14* (2006.01)

(86) Internationale Anmeldenummer:
**PCT/EP2002/009358**

(87) Internationale Veröffentlichungsnummer:
**WO 2003/026106 (27.03.2003 Gazette 2003/13)**

(54) **ELEKTRONISCH KOMMUTIERTER ELEKTROMOTOR MIT ACHSPARALLELEN SPULEN**

ELECTRONICALLY-COMMUTATED ELECTRIC MOTOR COMPRISING COILS WITH PARALLEL AXES

MOTEUR ELECTRIQUE A COMMUTATION ELECTRONIQUE A BOBINES PARALLELES A L'AXE

(84) Benannte Vertragsstaaten:
**CH DE ES FR GB IT LI**

(30) Priorität: **19.09.2001 DE 10146123**

(43) Veröffentlichungstag der Anmeldung:
**16.06.2004 Patentblatt 2004/25**

(73) Patentinhaber: **MINEBEA Co., Ltd.
Kitasaku-gun, Nagano-ken (JP)**

(72) Erfinder:
• **KLÖPZIG, Markus
78549 Spaichingen (DE)**
• **OELSCH, Jürgen
97618 Hohenroth (DE)**

(74) Vertreter: **Liesegang, Eva
Forrester & Boehmert,
Pettenkoferstrasse 20-22
80336 München (DE)**

(56) Entgegenhaltungen:
**US-A- 5 854 526**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen elektronisch kommutierten Elektromotor mit einem n-polig radial oder diametral magnetisierten Permanentmagneten, der die Vorteile einer Radialflußkonstruktion und einer Transversalflußkonstruktion in sich vereinigt. Hierzu schlägt die Erfindung eine neue Bauweise für einen elektronisch kommutierten Elektromotor vor.

Eine Beschreibung des Standes der Technik bezüglich elektronisch kommutierter Motoren höherer Leistung wird in der Literaturstelle von Hendershot "Design of brushless PermanentMagnet Motors" gegeben. Danach besteht der elektronisch kommutierte Motor aus den folgenden charakteristischen Bauteilen:

1. Feststehender Stator und Rotor bei Radialflußkonstruktion

Der Stator besteht aus einem z.B. geblecht ausgelegten Eisenkreis und einer meist aus drei Phasen aufgebauten Wicklung. Der Blechschnitt des Eisenkreises ist in die charakteristischen Teile Zahn, Hammer und Eisenrückschluß unterteilt. In dem von Zahn, Hammer und Eisenrückschluß umschlossenen Bereich wird die Wicklung eingelegt. Die Bereiche, in welche die Wicklung eingelegt werden kann, werden "Slot" oder Nut genannt. Der Eisenkreis kann für verschiedene Nut-Konfigurationen ausgelegt werden.

Der Rotor besteht aus einem Eisenrückschluß und dem flußerzeugenden Permanentmagneten. Der Permanentmagnet kann aus mehreren Segmenten zusammengesetzt sein; vorzugsweise ist er einteilig, n-polig radial oder diametral magnetisiert. Die Polzahl (P) entspricht der Anzahl der in wechselnder Polarität magnetisierten Polbereiche. Der Rotor kann als Innen- oder Außenläufermotor ausgelegt sein. Beim Außenläufermotor wird der Stator mit innen liegendem Eisenrückschluß und nach außen weisendem Zahn und Hammer ausgelegt. Beim Innenläufermotor wird der Stator mit außen liegenden Eisenrückschluß und nach innen weisendem Zahn und Hammer ausgelegt. Am Rotor des Außenläufermotors liegt der Magnet innen und der Eisenrückschluß außen. Am Rotor des Innenläufermotors liegt der Magnet außen und der Eisenrückschluß innen.

Diese Motorbauweise arbeitet nach dem Radialflußprinzip; d.h. der Magnetfluß durchsetzt die Spulen in bezug auf den Permanentmagneten und dessen Rotationsachse im wesentlichen in radialer Richtung. Der notwendige Versatz der Phasen des Motors ist abhängig von der Nut-, Pol- und Phasenzahl und wird durch Einlegen der Phasenwicklungen in verschiedene Bereiche des Stators eingestellt.

2. Kommutierungsvorrichtung

Der Motor ist mit einer Kommutierungseinrichtung auszulegen, die abhängig von der Position des Rotors das Bestromungsschema der Spulen wählt, welches das maximale Moment erzeugt. Die Kommutierungseinrichtung wird meist mit Hall-Positionssensoren in Kombination mit einem Sensormagneten und einer MQS-FET-Endstufe realisiert. Dabei detektieren die Hall-Positionssensoren die aktuelle Rotorposition und steuern die MOS-FET Endstufe in der erforderlichen Form an.

Für elektronisch kommutierte Motoren der beschriebenen Bauform sind vielfältige Kombinationen von Polzahl (2P) und Nutzahl (n) bekannt. Durch die Wahl von Pol- und Nutzahl kann der Motor an verschiedene Anforderungen wie trapezförmiger Momentverlauf, sinusförmiger Momentverlauf, geringes Rastmoment usw. angepaßt werden. Für besonders geringes Rastmoment wird häufig eine Schrägung von $2\pi/n$ der Polübergänge zwischen den Magneten vorgeschlagen.

Die hauptsächlichen Nachteile des Standardmotordesign für elektronisch kommutierte Motoren liegen in den aufwendigen Fertigungsverfahren für die Herstellung der Wicklung beim Innenläufermotor, dem Fehlen eines feststehenden Gehäuses und den hohen Magnetkosten beim Außenläufermotor.

3. Stator und Rotor bei Transversalflußkonstruktion

Bei einer Transversalflußmaschine wird für jede Motorphase ein Rotorabschnitt mit einem Permanentmagneten oder Permanentmagnetabschnitt vorgesehen, der radial magnetisierte, wechselnde Pole aufweist. Der Stator weist Flußleiteinheiten mit Klauen zur Umlenkung des radialen Magnetflusses in einen transversalen Magnetfluß auf, wobei sich die Klauen parallel zu der Rotationsachse des Permanentmagneten und in der Nähe der Magnetpolflächen des Permanentmagneten erstrecken. Die zu einer Phase der Transversalflußmaschine gehörende Flußleiteinheit umgibt jeweils eine konzentrisch gewickelte Ringspule, die in bezug auf den Permanentmagneten im wesentlichen in Längsrichtung von dem Magnetfluß umschlossen wird. Für eine mehrphasige Transversalflußmaschine werden jeweils mehrere solche Rotor/Stator-Einheiten auf einer Achse nebeneinander angeordnet bzw. übereinander gestapelt, wobei der notwendige Versatz der Phasen durch Verwendung von mehreren Permanentmagneten oder Magnetabschnitten, die gegeneinander versetzt sind, oder durch Stapeln der Statoreinheiten mit entsprechendem Drehwinkelversatz erreicht wird. Jede Phase weist somit ein eigenes Pol- bzw. Ankersystem mit einem Rotor mit Permanentmagneten, einem Stator und einer zugeordneten Ringspule auf. Die Anzahl der Flußaufnehmer oder Klauen entspricht der Anzahl der Pole.

Ein Beispiel einer bekannten Transversalflußmaschine mit weiteren Verweisen auf den Stand der Technik findet man in der DE 198 18 035 A1.

Die Transversalflußkonstruktion hat den Vorteil der einfacheren Wicklungstechnik für die Spulen, sie erfordert jedoch ein höheres Magnetvolumen im Vergleich zur Radialflußmaschine, um einen vergleichbaren Magnetfluß zu erzeugen. Ferner hat die Transversalflußmaschine den Nachteil, daß die Anzahl der Magnetpole der Anzahl der Flußaufnehmer oder Klauen der Flußleiteinheiten entsprechen muß, wodurch die Möglichkeiten des Einflusses auf den Drehmomentverlauf bei der Transversalflußmaschine beschränkt sind.

Das U.S.-Patent 5,854,526 beschreibt einen Gleichstrommotor mit einem mehrpoligen Permanentmagneten und mehreren Flußleiteinheiten. Jede Flußleiteinheit weist einen Flußaufnehmerabschnitt und einen Flußkonzentratorabschnitt auf, wobei jede Flußleiteinheit einen Radialmagnetfluß von dem Permanentmagneten aufnimmt und in einen Transversalmagnetfluß umlenkt. Der Motor hat ferner mehrere zu dem Permanentmagneten achsparallel angeordnete Spulen. Zweck der in diesem Patent offenbarten Motorbauweise ist ein kostengünstig Gleichstrommotor mit großem Drehmoment und guter Leistungsfähigkeit anzugeben, der präzise hergestellt werden kann.

Die DE 1 018 142 beschreibt einen selbstlaufenden Synchronmotor mit zwei koaxial angebrachten Spulen, die an ihren Stirnseiten mit gezahnten, aus ferromagnetischem Werkstoff bestehenden Polplatten versehen sind, welche eine wenigstens ungefähr gleiche Anzahl kreisförmig angeordnete Zähne aufweisen. Die Zähne von jeweils zwei zu verschiedenen Spulen gehörenden Polplatten sind je zu einem Zahn kombiniert. Zweck dieser Anordnung ist, die Anzahl der Polteilungen pro Längeneinheit zu vergrößern.

Es ist die Aufgabe der vorliegenden Erfindung, ein neues Motorprinzip für einen elektronisch kommutierten Elektromotor anzugeben, dessen Spulen einfach zu wickeln sind, der im Vergleich zu bekannten Radialflußmaschinen eine vergleichbare Leistung erreichen kann und der eine beliebige Kombination der Polzahl des Permanentmagneten und der Nutzahl des Stators zuläßt, um den Drehmomentverlauf nach Bedarf beeinflussen zu können.

Diese Aufgabe wird durch einen elektronisch kommutierten Elektromotor mit den Merkmalen von Anspruch 1 gelöst. Bevorzugte Ausführungsformen der Erfindung sind in den Unteransprüchen angegeben.

Der erfindungsgemäße Elektromotor weist einen Rotor mit Magnetsegmenten oder einen einteiligen mehrpolig magnetisierten Permanentmagneten und mehrere Flußleiteinheiten auf, die jeweils wenigstens einen Flußaufnehmerabschnitt und einen Flußkonzentratorabschnitt, vorzugsweise mehrere Flußaufnehmerabschnitte, aufweisen, wobei die Flußleiteinheit einen radialen Magnetfluß von dem Permanentmagneten aufnimmt und in einen transversalen Magnetfluß umlenkt. Der Elektromotor umfaßt ferner mehrere Spulen, die jeweils einer der Flußleiteinheiten zugeordnet und achsparallel zu dem Permanentmagneten und dessen Rotationsachse angeordnet sind.

Durch eine Verschachtelung mehrerer Flußleiteinheiten für mehrere Phasen des Elektromotors, wie weiter unten noch mit weiteren Einzelheiten beschrieben sind, ist es möglich, einen mehrphasigen Elektromotor zu realisieren, der mit einem einzigen radial magnetisierten Permanentmagneten arbeitet und für jede Phase eine oder mehrere ringförmige achsparallele Spulen aufweist, die jedoch anders als bei der üblichen Transversalflußmaschine nicht konzentrisch zu dem Permanentmagneten sind, sondern (bei einer Innenläuferbauweise) an dessen Außenumfang parallel zur Rotationsachse des Permanentmagneten angeordnet sind. Bei einer Außenläuferbauweise sind die Spulen entsprechend am Innenumfang des Permanentmagneten angeordnet. Dies ermöglicht eine einfachere Wicklung der Spulen als bei den Radialflußmaschinen und eine kompaktere Bauweise als bei den üblichen Transversalflußmaschinen. Insbesondere erlaubt die Erfindung sogar die Verwendung einfacher vorgefertigter Spulen, sogenannter Formspulen, was zu einer erheblichen Vereinfachung der Herstellung des Elektromotors führt.

Erfindungsgemäß ist der Permanentmagnet einteilig oder aus Segmenten zusammengesetzt und auf einem Rotor mit Eisenrückschlußring angeordnet, und die Spulen sitzen auf Spulenkernen, die mit dem Flußkonzentrator und einem Eisenrückschluß gekoppelt sind. Bei einer bevorzugten Ausführungsform der Erfindung bildet jeder Flußkonzentratorabschnitt einer Flußleiteinheit einen Ring oder Ringabschnitt, der im wesentlichen konzentrisch zu dem Permanentmagneten ist. In diesem Zusammenhane bedeutet Ring nicht notwendig kreisförmig, sondern der Flußkonzentrator kann auch als Polygon, Oval oder ähnlich gestaltet sein. An dem inneren Umfang der Flußkonzentratorringe (bei der Innenläuferbauweise; beim Außenläufermotor am äußeren Umfang) sind jeweils die Flußaufnehmer angeordnet, welche sich im wesentlichen parallel zu der Rotationsachse des Permanentmagneten und in der Nähe seiner Pole erstrecken. Die Funktion der Flußaufnehmerabschnitte ist dem Hammer der Statorbleche einer Radialflußmaschine vergleichbar, so daß sich mit dem erfindungsgemäßen Elektromotor nahezu beliebige Kombinationen aus Polzahlen und Nutzahlen realisieren lassen.

Bei dem erfindungsgemäßen Motor sind beispielsweise alle bekannten Gestaltungsvarianten für dreiphasige elektronisch kommutierte Gleichstrommotoren, welche mit konzentrierten Wicklungen arbeiten, realisierbar. Dies sind z.B. die Varianten sechs Nuten (entsprechend den Flußaufnehmerabschnitten) mit vier Polen, neun Nuten mit sechs Polen, 12 Nuten mit acht Polen und alle weiteren Varianten, welche die Formel

$$\text{Nutzahl (Anzahl der Flußaufnehmerabschnitte)} \approx 1{,}5 \times \text{Polzahl}$$

erfüllen. Weiterhin sind auch Sonderformen, wie 12 Nuten mit 10 Polen und 12 Nuten mit 14 Polen etc. realisierbar. Durch die Konzentration des Magnetflusses der einzelnen Flußaufnehmerabschnitte in dem zugehörigen Flußkonzentratorabschnitt kann ferner die Anzahl der Spulen je Phase variiert werden.

Erfindungsgemäß können für jede Phase des Elektromotors mehrere Spulen, vorzugsweise eine oder zwei Spulen vorgesehen werden, welche auf Spulenkernen angeordnet sind, die mit dem jeweiligen Flußkonzentratorabschnitt einer zugehörigen Flußleiteinheit verbunden sind. Die Spulenkernabschnitte erstrecken sich im wesentlichen parallel zu der Rotationsachse des Permanentmagneten und sind an ihrem dem Flußkonzentratorabschnitt gegenüberliegenden Ende mit einem gemeinsamen magnetischen Rückschlußring verbunden. Durch diese Bauweise kann somit auch die Anzahl der Spulen pro Phase variiert werden.

Eine besonders kompakte Bauweise des erfindungsgemäßen Elektromotors wird bei einer bevorzugten Ausführungsform dadurch erreicht, daß die Flußleiteinheiten koaxial derart übereinander angeordnet und verschachtelt sind, daß die Flußaufnehmerabschnitte und die Spulenkerne einer außen liegenden Flußleiteinheit, welche sich jeweils parallel zu der Achse des Permanentmagneten erstrecken, durch entsprechende Ausnehmungen einer weiter innen liegenden Flußleiteinheit geführt sind. Die Flußaufnehmerabschnitte der einzelnen Flußleiteinheiten sind derart gegeneinander versetzt, daß diese in regelmäßigen Abständen auf einem konzentrischen Kreis um den Permanentmagneten herum zu liegen kommen.

Bei einer besonders bevorzugten Ausführungsform der Erfindung können die in diesem Sinne außen liegende Flußleiteinheit und der Eisenrückschluß so gestaltet sein, daß sie jeweils Lager zur Lagerung einer Rotorwelle aufnehmen. Um eine magnetische Entkopplung von Rotor und Stator zu erreichen, kann beispielsweise die Rotorwelle aus einem magnetisch nicht leitenden Material hergestellt sein, oder es wird eine andere geeignete magnetische Entkopplung beispielsweise in den Lagern vorgesehen. Durch die Aufnahme der Wellenlager in dem Magnetkreis werden die hierfür normalerweise notwendigen Motorflansche nicht mehr benötigt.

Sämtliche Teile des Magnetkreises, d.h. insbesondere die Flußleiteinheiten und der magnetische Rückschlußring, können als einfache Blechformteile gefertigt werden, was eine schnelle und effektive Herstellung des Motors ermöglicht. Wahlweise kann auch eine Blechung von Teilen des Eisenkreises vorgesehen werden.

Durch den erfindungsgemäßen Elektromotor wird es möglich, vielfältige Kombinationen von Pol- und Nutzahlen, wie bei Radialflußmaschinen üblich, in einer Transversalflußanordnung zu realisieren, wobei die Spulen als Ringspulen realisiert werden können, welche wesentlich einfacher zu wickeln sind. Durch die Anordnung der achsparallelen Spulen an dem Umfang des Permanentmagneten ist es möglich, die Flußleiteinheiten und Spulen für die jeweiligen Phasen derart zu verschachteln, daß für sämtliche Phasen ein einziger mehrpoliger Permanentmagnet verwendet werden kann, wodurch sich eine kompaktere Bauweise als bei üblichen Transversalflußmaschinen ergibt. Die Erfindung hat den zusätzlichen Vorteil, daß die Lager für die Rotorwelle in dem Magnetkreis aufgenommen werden können, so daß keine zusätzlichen Motorflansche notwendig sind.

Diese sowie weitere Vorteile der Erfindung ergeben sich aus der folgenden Beschreibung bevorzugter Ausführungsformen mit Bezug auf die Zeichnungen. In den Figuren:

Fig. 1    zeigt eine schematische Querschnittdarstellung durch den Elektromotor gemäß einer ersten Ausführungsform der Erfindung entlang der Linie B-B in Fig. 2;

Fig. 2    zeigt eine schematische Längsschnittdarstellung durch den Elektromotor gemäß der ersten Ausführungsform der Erfindung entlang der Linie A-A in Fig. 1;

Fig. 3    eine perspektivische Explosionsdarstellung des Elektromotors gemäß der ersten Ausführungsform der Erfindung;

Fig. 4    zeigt eine Unteransicht einer Baugruppe, die drei vormontierte Flußleiteinheiten gemäß einer zweiten Ausführungsform der Erfindung umfaßt;

Fig. 5    zeigt eine Unteransicht einer Baugruppe, die drei vormontierte Flußleiteinheiten gemäß einer dritten Ausführungsform der Erfindung umfaßt;

Fig. 6    zeigt eine Unteransicht einer Baugruppe, die drei vormontierte Flußleiteinheiten gemäß einer vierten Ausführungsform der Erfindung umfaßt;

Fig. 7    zeigt ein Stanzbiegeteil, das zur Herstellung einer Flußleiteinheit gemäß der vierten Ausführungsform der Erfindung verwendet werden kann;

Fig. 8    zeigt eine Unteransicht einer Baugruppe, die drei vormontierte Flußleiteinheiten gemäß einer fünften Ausführungsform der Erfindung umfaßt;

Fig. 9    zeigt eine Unteransicht einer Baugruppe, die drei vormontierte Flußleiteinheiten gemäß einer sechsten Ausführungsform der Erfindung umfaßt;

Fig. 10  zeigt ein Stanzbiegeteil, das zur Herstellung einer Flußleiteinheit gemäß der sechsten Ausführungsform der Erfindung verwendet werden kann;

Fig. 11  zeigt eine schematische Längsschnittdarstellung durch den Elektromotor gemäß einer siebten Ausführungsform der Erfindung.

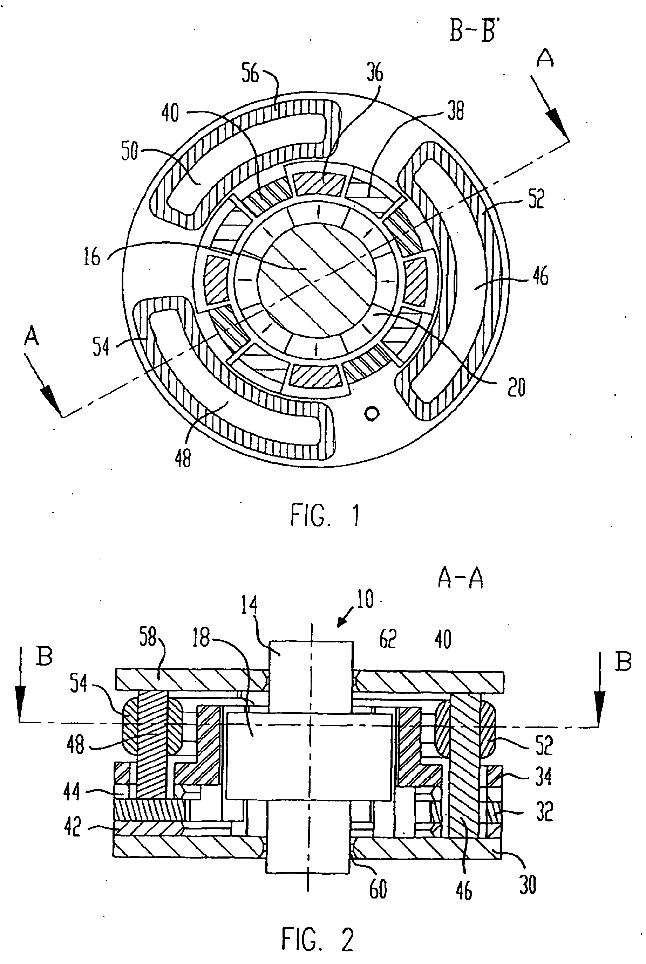

In den Figuren 1 und 2 ist eine bevorzugte Ausführungsform eines elektronisch kommutierten Gleichstrommotors gemäß der Erfindung gezeigt, wobei Fig. 1 eine Querschnittdarstellung des Motors entlang der Linie B-B in Fig. 2 ist und Fig. 2 eine Längsschnittdarstellung des Motors entlang der Linie A-A in Fig. 1 ist.

Der erfindungsgemäße Elektromotor weist einen Rotor 10 und einen Stator 12 auf, wobei der gezeigte Motor nach dem Prinzip eines Innenläufermotors aufgebaut ist. Die Erfindung ist jedoch in gleicher Weise auch auf Außenläufermotoren anwendbar, wobei der Fachmann den im folgenden erläuterten Aufbau des Motors umkehren kann, um diesen als Außenläufermotor zu gestalten.

Der Rotor 10 umfaßt eine Rotorwelle 14, einen Eisenrückschlußkörper 16, der auf der Rotorwelle 14 sitzt, und einen mehrpolig magnetisierten Permanentmagneten 18, der als Permanentmagnetring oder als segmentierter Permanentmagnet ausgestaltet sein kann. Fig. 1 zeigt einen Permanentmagneten 18 mit acht Polen 20, 22, selbstverständlich ohne daß die Erfindung auf eine bestimmte Polzahl beschränkt wäre.

Der in den Fig. 1 und 2 gezeigte Elektromotor weist drei Flußleiteinheiten 24, 26, 28 auf, die jeweils einen ringförmigen Flußkonzentratorabschnitt 30, 32, 34 und bei der gezeigten Ausführungsform jeweils vier Flußaufnehmerabschnitte 36, 38, 40 aufweisen. Die Flußleiteinheiten 24, 26, 28 sind durch eine Schicht aus einem para- oder diamagnetischen Werkstoff 42, 44, z.B. Aluminium, magnetisch entkoppelt.

Den Flußleiteinheiten 24, 16, 28 liegt ein gemeinsamer Eisenrückschluß 58 gegenüber, der drei Spulenkerne 46, 48, 50 trägt, die jeweils eine Ringspule 52, 54, 56. aufnehmen, welche sich achsparallel zu der Rotorwelle 14 und dem Permanentmagneten 18 erstrecken. Die Spulen 52, 54, 56 sind bei der in den Figuren gezeigten Innenläuferbauweise gleichmäßig um den Umfang des Permanentmagneten 18 verteilt angeordnet, wie in Fig. 1 gezeigt.

Die Spulenkerne 46, 48, 50 werden an ihren dem Eisenrückschluß 58 gegenüberliegenden Enden mit den zugehörigen Flußkonzentratorabschnitten 30, 32, 34 der Flußleiteinheiten 24, 26, 28 verbunden. Über die Flußaufnehmerabschnitte, die Flußkonzentratorabschnitte, die Spulenkerne und den Eisenrückschluß wird ein Magnetkreis geschlossen, wobei die Ringspulen 52, 54, 56 im Betrieb transversal von dem Magnetfeld durchsetzt werden.

Schließlich sind in Fig. 2 noch Lager 60, 62 dargestellt, welche zur Lagerung der Rotorwelle 14 dienen, wobei ein erstes Lager 60 von der äußeren Flußleiteinheit 24 gehalten ist und das zweite Lager 62 von dem Eisenrückschluß 58 gehalten ist.

Bei der gezeigten Ausführungsform des erfindungsgemäßen Elektromotors sind für die drei Phasen eines elektronisch kommutierten Gleichstrommotors drei Flußleiteinheiten 24, 26, 28 mit den zugehörigen Spulen 52, 54, 56 vorgesehen, die auf eine dem Fachmann bekannte Art über eine Kommutierungseinrichtung angesteuert werden können. Eine besonders kompakte Bauweise ergibt sich dadurch, daß die Flußleiteinheiten 24, 26, 28 ineinander verschachtelt sind und die außen liegende Flußleiteinheit 24 sowie der Eisenrückschluß 58 die Lager 60, 62 für die Rotorwelle 14 aufnehmen können.

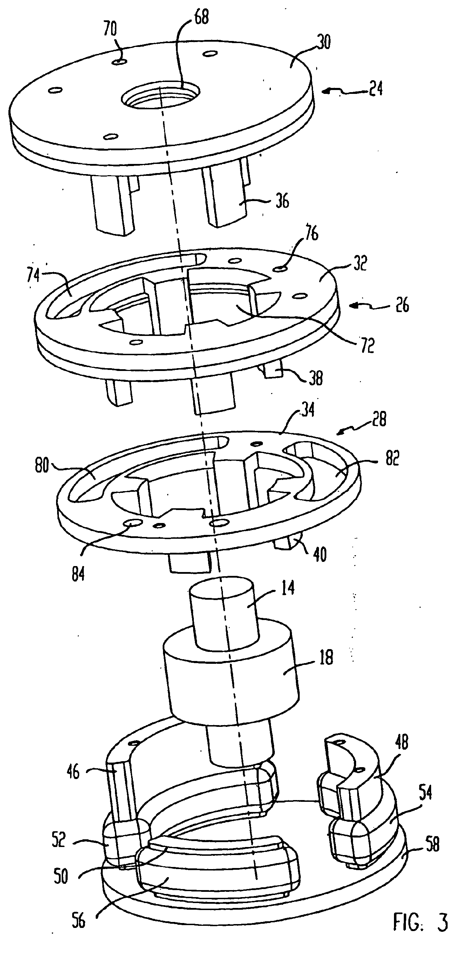

Eine bevorzugte Bauweise der Flußleiteinheiten, des Eisenrückschlußes und der Spulenkerne ergibt sich deutlicher mit Bezug auf Fig. 3. Man sollte beachten, daß es sich bei sämtlichen Figuren um schematische Darstellungen der Erfindung handelt, wobei die Einzelkomponenten des erfindungsgemäßen Elektromotors auf verschiedene Weisen realisiert werden können. Die Komponenten können z.B. gedreht, gefräst oder durch Stanz/Biegeoperationen hergestellt werden.

Fig. 3 zeigt schematisch den erfindungsgemäßen Elektromotor mit seinen Einzelkomponenten in perspektivischer Explosionsdarstellung. In Fig. 3 ist der scheibenförmige Eisenrückschluß dargestellt, der aus einer flachen Ringscheibe aus einem magnetisch leitenden Material hergestellt ist und Bohrungen (nicht gezeigt) zur Befestigung der Spulenkerne 46, 48, 50 sowie in seiner Mitte einen Lagersitz (in Fig. 3 nicht gezeigt) zur Aufnahme des Lagers der Rotorwelle aufweist. Die Spulenkerne 46, 48, 50 können durch die Bohrungen beispielsweise mittels (nicht gezeigt) Schrauben oder Nieten an dem Eisenrückschluß 58 befestigt werden. Jeder Spulenkern trägt eine Ringspule 52, 54 bzw. 56.

Fig. 3 zeigt ferner eine äußere, eine mittlere und eine innere Flußleiteinheit 24, 26 bzw. 28 mit weiteren Einzelheiten.

Die äußere Flußleiteinheit 24 weist einen ringförmigen Flußkonzentratorabschnitt 30 und vier sich senkrecht zu diesem erstreckende Flußaufnehmerabschnitte 36 an dessen innerem .Umfang auf. Der Flußkonzentratorabschnitt 30 weist eine zentrale Bohrung mit einem Lagersitz 68 zur Aufnahme des Lagers 60 zur Lagerung der Rotorwelle 14 auf. Der Flußkonzentratorabschnitt 30 weist ferner auf seinem Umfang verteilte Bohrungen 70 zur Befestigung des Spulenkerns 46 mittels Schrauben oder dergleichen auf.

Die Flußleiteinheiten 24, 26, 28 haben grundsätzlich eine ähnliche Struktur, sind jedoch so angepaßt, daß sie ineinander verschachtelt angeordnet werden können.

Die mittlere Flußleiteinheit 26 weist einen ringrömigen Flußkonzentrator 32 und vier sich senkrecht zu diesem erstreckende Flußaufnehmerabschnitte 38 an dessen innerem Umfang auf. Der Flußkonzentratorabschnitt 32 weist eine zentrale Öffnung 72 zur Durchführung der Flußaufnehmerabschnitte 36 der äußeren Flußleiteinheit 24 auf, wobei im zusammengesetzten Zustand die Flußaufnehmerabschnitte 36 und die Flußaufnehmerabschnitte 38, welche auf demselben Radius liegen, derart gegeneinander versetzt sind, daß sie nebeneinander zu liegen kommen, wie in Fig. 1 gezeigt ist. Der Flußkonzentratorabschnitt 32 weist ferner eine Öffnung 74 zur Durchführung des Spulenkerns 46 auf, der zu der äußeren Flußleiteinheit 24 gehört, wie sich aus Fig. 2 ergibt. Schließlich weist der Flußkonzentratorabschnitt 32 auf seinem Umfang verteilte Bohrungen 76 zur Befestigung des zugehörigen Spulenkerns 48 mittels Schrauben oder dergleichen auf.

Die innere Flußleiteinheit 28 ist im wesentlichen wie die mittlere Flußleiteinheit 26 aufgebaut und umfaßt einen Flußkonzentratorabschnitt 34 und vier sich senkrecht zu diesem erstreckende Flußaufnehmerabschnitte 40 am inneren Umfang des Flußkonzentratorabschnitts 34, eine zentrale Öffnung 78 zum Durchführen der Flußaufnehmerabschnitte 36, 38 der äußeren und der mittleren Flußleiteinheit 24, 26, wobei die Flußaufnehmerabschnitte 30, 32, 34, wie in Fig. 1 gezeigt, in ihrer Drehlage so gegeneinander versetzt sind, daß sie in Folge nebeneinander zu liegen kommen. In dem Flußkonzentratorabschnitt 34 der inneren Flußleiteinheit 28 sind zwei Öffnungen 80, 82 zum Durchführen des Spulenkerns 46, welche der äußeren Flußleiteinheit 24 zugeordnet ist, und des Spulenkerns 48, welcher der mittleren Flußleiteinheit 26 zugeordnet ist, vorgesehen. Schließlich weist auch, der Flußkonzentratorabschnitt 34 der inneren Flußleiteinheit 28 Bohrungen 84 zum Befestigen des zugehörigen Spulenkerns 50 auf.

Aus Fig. 3 ergibt sich, daß der Spulenkern 46, welcher der äußeren Flußleiteinheit 24 zugeordnet ist, im wesentlichen genauso lang bzw. geringfügig länger ist als die Flußaufnehmerabschnitte 36 der äußeren Flußleiteinheit 24 ist; der Spulenkern 48, welcher der mittleren Flußleiteinheit 26 zugeordnet ist, ist gleich lang oder geringfügig länger als die Flußaufnehmerabschnitte 38 der mittleren Flußleiteinheit 26, und der Spulenkern 50, welcher der inneren Flußleiteinheit 28 zugeordnet ist, ist genauso lang oder geringfügig länger als die Flußaufnehmerabschnitte 40 der inneren Flußleiteinheit 28.

Wenn die Flußleiteinheiten 24, 26, 28 und der Eisenrückschluß 38 mit den daran angebrachten Spulenkernen 46, 48, 50 in dem fertigen Elektromotor zusammengebaut sind, erstrecken sich die Flußaufnehmberabschnitte 36, 38, 40 in wechselnder Folge am Innenumfang der Flußkonzentratorabschnitte 30, 32, 34, parallel zu der Rotationsachse des Permanentmagneten und in der Nähe seiner Pole, wobei die Flußaufnehmerabschnitte der weiter außen liegenden Flußleiteinheiten durch die Öffnungen 72, 78 geführt sind.

Die Spulenkerne 46, 48, 50 mit den darauf gewickelten Ringspulen 52, 54, 56 erstrecken sich außerhalb der Flußaufnehmerabschnitte 36, 38, 40 achsparallel zum Permanentmagneten, wobei die Spulenkerne mit den Spulen darauf gleichmäßig um den Umfang des Permanentmagneten verteilt sind. Man beachte, daß anstelle von einer Spule pro Phase und Flußleiteinheit des Elektromotors beispielsweise auch zwei oder drei Spulen vorgesehen werden können. Die Spulenkerne 46, 48 der weiter außen liegenden Flußleiteinheiten 24, 26 sind durch hierfür vorgesehene Öffnungen 74, 80, 82 in den weiter innen liegenden Flußleiteinheiten geführt. Die Länge der Spulenkerne 46, 48, 50 ist so bemessen, daß die freien Enden der Spulenkerne in einer Ebene liegen und mit dem Eisenrückschluß 58 verbunden werden können.

Bei dem erfindungsgemäßen Elektromotor können für die Ringspule 52, 54, 56 einfache vorgefertigte Spulen, sogenannte Formspulen, verwendet werden, wodurch der Wickelprozeß wesentlich einfacher als bei üblichen Radialflußmaschinen ist. Sämtliche Teile des Magnetkreises und insbesondere die Flußleiteinheiten 24, 26, 28 und der Eisenrückschluß 58 können als Blechformteile gefertigt werden, wodurch die Herstellung weiter vereinfacht wird. Auch ein geblechter Stator, wie bei einer üblichen Radialflußmaschine, kann verwendet werden.

Durch die verschachtelte Bauweise ist es möglich, daß die Flußaufnehmerabschnitte 36, 38, 40 der Flußleiteinheiten 24, 26, 28 auf einem Radius im Wechsel nebeneinander liegen, so daß ein einziger Permanentmagnet für einen drei- oder mehrphasigen Elektromotor ausreichend ist und sich eine besonders kompakte Bauweise ergibt. Durch die Konzentration des Magnetflusses in mehreren Flußaufnehmerabschnitten pro Phase kann das Verhältnis zwischen der Anzahl der Flußaufnehmer, welche den Nuten eines Radialflußmotors entsprechen, und der Pole des Permanentmagneten nahezu beliebig variiert werden, um einen gewünschten Drehmomentverlauf einzustellen, wie im einleitenden Teil dieser Anmeldung beschrieben ist.

Durch die Konzentration des Magnetflusses über die einzelnen Flußaufnelunerabschnitte in dem Flußkonzentratorabschnitt ist es ferner möglich, für jede Phase eine oder mehrere Spulen zu verwenden.

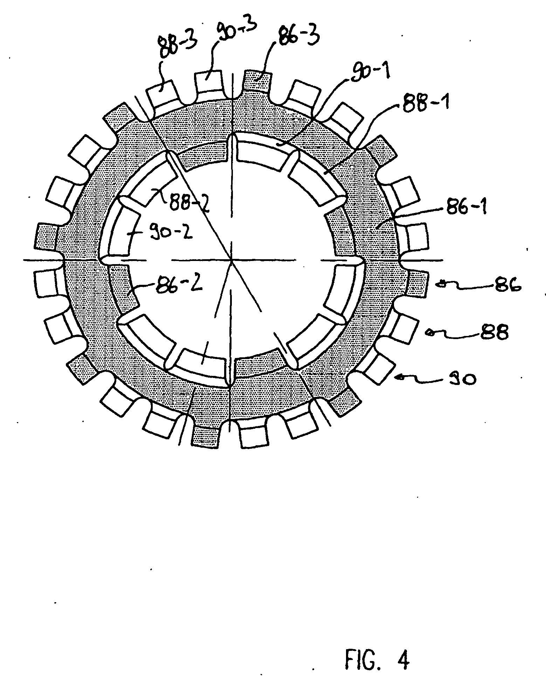

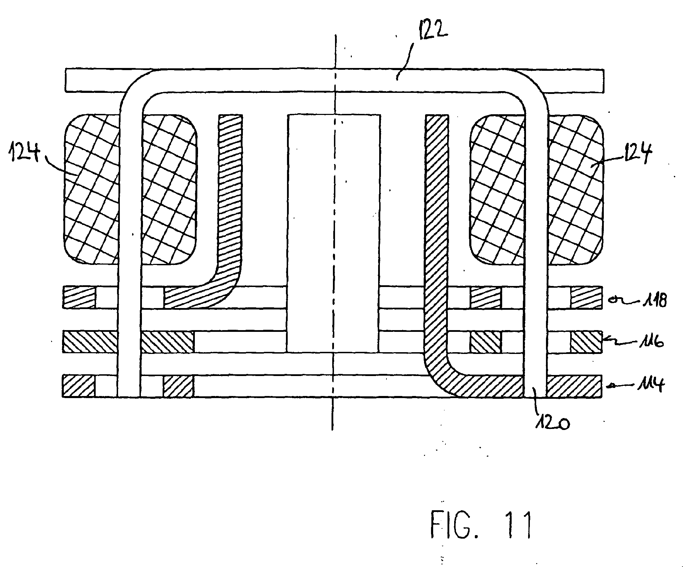

Fig. 4 zeigt eine Unteransicht einer Baugruppe, die drei vormontierte, ineinander verschachtelte Flußleiteinheiten gemäß einer zweiten Ausführungsform der Erfindung umfaßt. Die am weitesten innen liegende Flußleiteinheit ist mit 86 bezeichnet und die weiter außen liegenden Flußleiteinheiten sind mit 88 und 90 bezeichnet. Bei dieser zweiten Ausführungsform weist jede Flußleiteinheit einen ringförmigen Flußkonzentratorabschnitt 86-1, 88-1, 90-1, vier Flußaufnehmerabschnitte 86-2, 88-2, 90-2 und acht Spulenkerne 86-3, 88-3, 90-3 auf, wobei die Flußaufnehmerabschnitte und die Spulenkerne mit ihrem zugehörigen Flußkonzentratorabschnitt verbunden sind. Die Flußaufnehmerabschnitte 86-2, 88-2, 90-2 erstrecken sich in dem fertig montierten Motor achsparallel zu dem Permanentmagneten und dessen Rotationsachse, in der Nähe der Pole des Permanentmagneten. Sie nehmen den radialen Magnetfluß von dem Permanentmagneten auf und leiten ihn auf den zugehörigen Flußkonzentratorabschnitt 86-1, 88-1, 90-1. An der Außenseite der Flußkonzentratorabschnitte 86-1, 88-1, 90-1 sind die Spulenkerne 86-3, 88-3, 90-3 vorgesehen, die sich ebenfalls achsparallel zu der Rotationsachse des Permanentmagneten erstrecken. Die Spulenkerne der weiter außen liegenden Flußleiteinheiten 88, 90 sind durch Ausnehmungen am Innenumfang der weiter innen liegenden Flußkonzentratorabschnitte 86-1, 88-1 geführt. Die Flussleiteinheiten 86, 88, 90 gemäß der zweiten Ausführungsform der Erfindung werden vorzugsweise als Stanzbiegeteil hergestellt, wie weiter unten mit Bezug auf Fig. 11 erläutert ist. Die Erfindung ist jedoch auf keine bestimmte Herstellungsart beschränkt, und die Flußleiteinheiten können auch gefräst, gedreht oder gegossen werden sowie einteilig hergestellt oder aus mehreren Bauteilen zusammengesetzt werden.

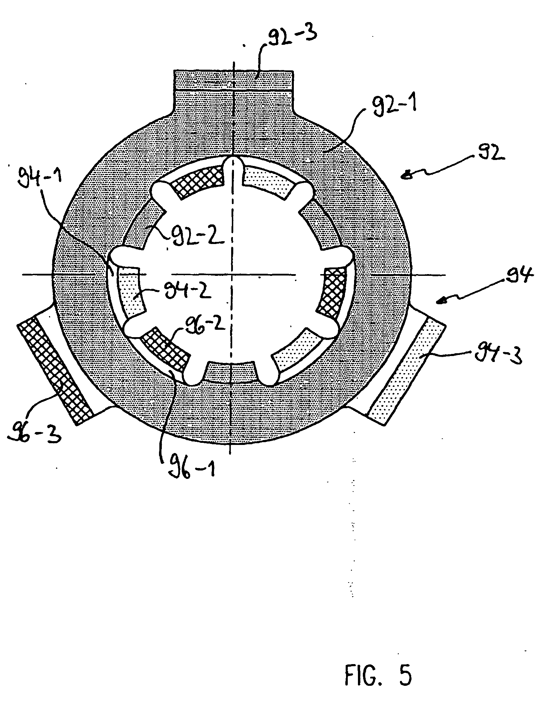

Fig. 5 zeigt eine Unteransicht einer Baugruppe, die drei vormontierte, ineinander verschachtelte Flußleiteinheiten gemäß einer dritten Ausführungsform der Erfindung umfaßt. Die am weitesten innen liegende Flußleiteinheit ist mit 92 bezeichnet und die weiter außen liegenden Flußleiteinheiten sind mit 94 und 96 bezeichnet. Bei dieser dritten Ausführungsform weist jede Flußleiteinheit einen ringförmigen Flußkonzentratorabschnitt 92-1, 94-1, 96-1, drei Flußaufnehmerabschnitte 92-2, 94-2, 96-2 und einen Spulenkern 92-3, 94-3, 96-3 auf. Im übrigen gilt für die dritte Ausführungsform das oben in bezug auf die zweite Ausführungsform gesagte.

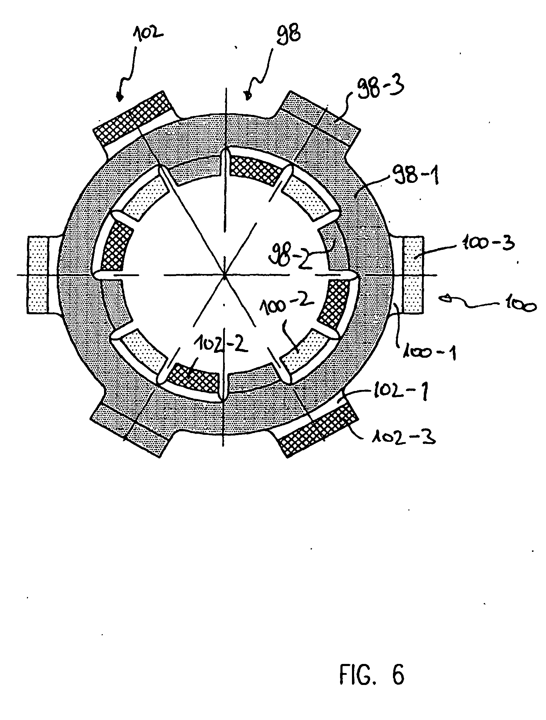

Fig. 6 zeigt eine Unteransicht einer Baugruppe, die drei vormontierte, ineinander verschachtelte Flußleiteinheiten gemäß einer vierten Ausführungsform der Erfindung umfaßt. Die am weitesten innen liegende Flußleiteinheit ist mit 98 bezeichnet und die weiter außen liegenden Flußleiteinheiten sind mit 100 und 102 bezeichnet. Bei dieser vierten Ausführungsform weist jede Flußleiteinheit einen ringförmigen Flußkonzentratorabschnitt 98-1, 100-1, 102-1, vier Flußaufnehmerabschnitte 98-2, 100-2, 102-2 und zwei Spulenkerne 98-3, 100-3, 102-3 auf. Im übrigen gilt für die vierte Ausführungsform das oben in bezug auf die zweite Ausführungsform gesagte.

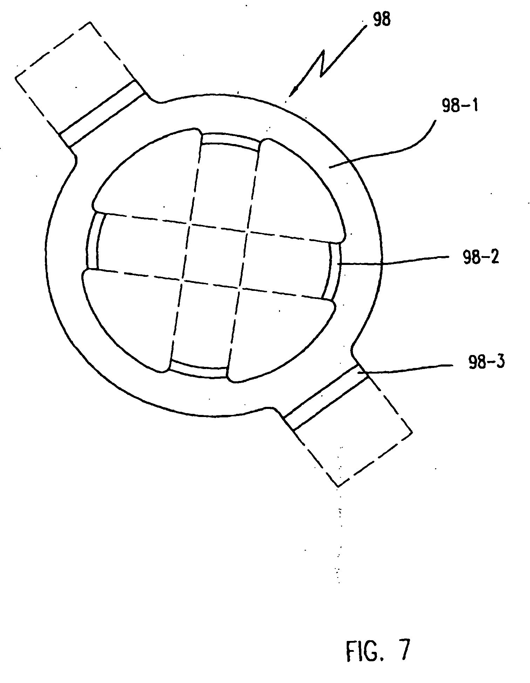

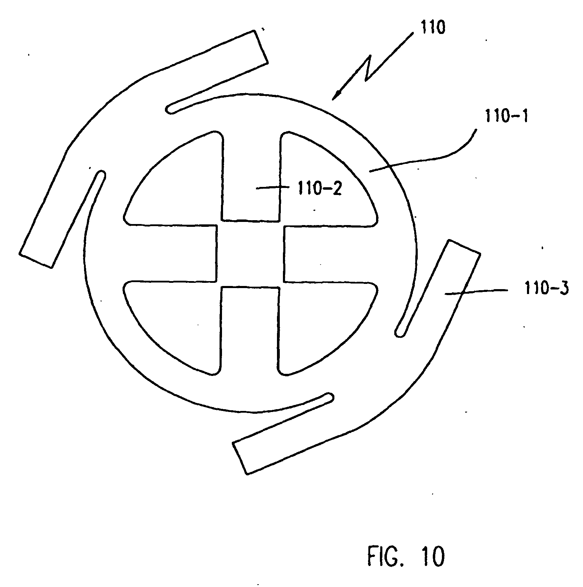

Fig. 7 zeigt ein Stanzbiegeteil, das zur Herstellung z. B. der Flußleiteinheit 98 der vierten Ausführungsform der Erfindung verwendet werden kann, die in Fig. 10 gezeigt ist. In Fig. 11 ist die Flußleiteinheit 98 mit dem ringförmigen Flußkonzentratorabschnitt 98-1, den vier Flußaufnehmerabschnitten 98-2 und den zwei Spulenkernen 98-3 nach dem Stanz-Biegevorgang mit durchgezogenen Linien gezeichnet, und die Kontur des Stanzbiegeteil vor dem Biegevorgang ist gestrichelt gezeichnet.

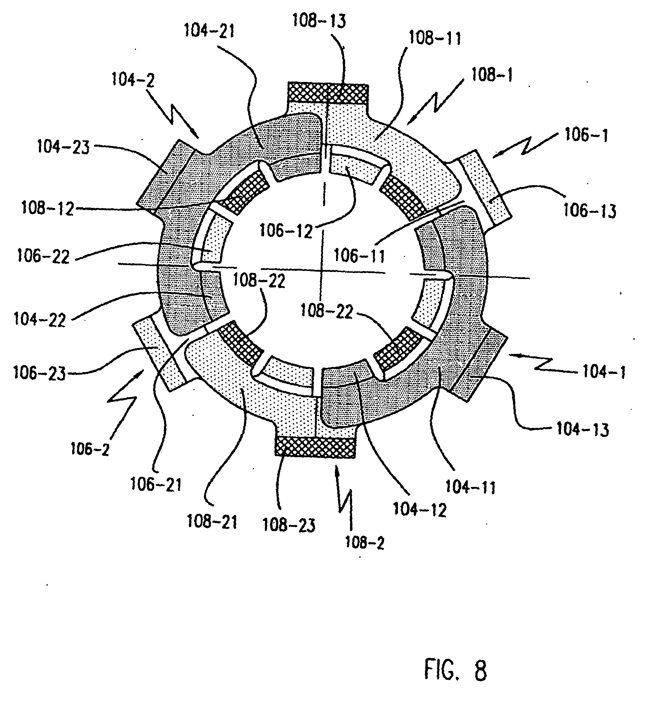

Fig. 8 zeigt eine Unteransicht einer Baugruppe, die drei vormontierte, ineinander verschachtelte Flußleiteinheiten gemäß einer fünften Ausführungsform der Erfindung umfaßt. Bei dieser Ausführungsform ist jede Flußleiteinheit in zwei Flußleitstücke aufgeteilt. Die am weitesten innen liegende Flußleiteinheit umfaßt zwei Flußleitstücke 104-1 und 104-2, und die weiter außen liegenden Flußleiteinheiten umfassen ebenso jeweils zwei Flußleitstücke 106-1 und 106-2 bzw. 108-1 und 108-2. Die zwei Flußleitstücke einer Flußleiteinheit sind jeweils einer Phase des Motors zugeordnet, und ihre Flußkonzentratorabschnitte liegen jeweils in einer Ebene. Bei einer alternativen Ausführungsform kann das Flußleitstück 104-2 in eine Ebene mit den Flußleitstücken 106-1 und 108-2 und das Flußleitstück 104-1 in eine Ebene mit den Flußleitstücken 106-2 und 108-1 gelegt werden, um den axialen Raumbedarf für die verschachtelte Anordnung aus den drei Flußleiteinheiten zu minimieren. Die axialen Längen der Spulenkerne und Flußleitstücke müssen dann entsprechend angepaßt sein.

Bei dieser fünften Ausführungsform weist jedes Flußleitstück 104-1, 104-2, 106-1, 106-2, 108-1, 108-2 einen Flußkonzentratorabschnitt 104-11, 104-21, 106-11, 106-21, 108-11, 108-21 in der Form eines Teilrings auf, der sich insbesondere über etwa einen 1/3-Kreis erstreckt. Mit jedem Flußkonzentratorabschnitt 104-11, 104-21, 106-11, 106-21, 108-11, 108-21 sind jeweils zwei Flußaufnehmerabschnitte 104-12, 104-22, 106-12, 106-22, 108-12, 108-22 und ein Spulenkern 104-13, 104-23, 106-13, 106-23, 108-13, 108-23 verbunden, so daß sich insgesamt eine Konfiguration mit vier Flußaufnehmerabschnitten und zwei Spulenkernen pro Flußleiteinheit ergibt. Die besondere Konfiguration der Flußleiteinheiten der fünften Ausführungsform, die aus zwei Flußleitstücken zusammengesetzt sind, kann Vorteile bei der Herstellung haben, weil die einzelnen Flußleitstücke einfacher geformt werden können. Ein weiterer Vorteil der fünften Ausführungsform ist, daß die Flußkonzentratorabschnitte von jeweils drei Flußleitstücken in einer Ebene angeordnet werden können, und somit für die drei Flußleiteinheiten nur zwei Ebenen benötigt werden, so daß der Platzbedarf für die gesamte Baugruppe aus den drei Flußleiteinheiten verringert wird.

Im übrigen gilt für die fünfte Ausführungsform das oben in bezug auf die zweite Ausführungsform gesagte.

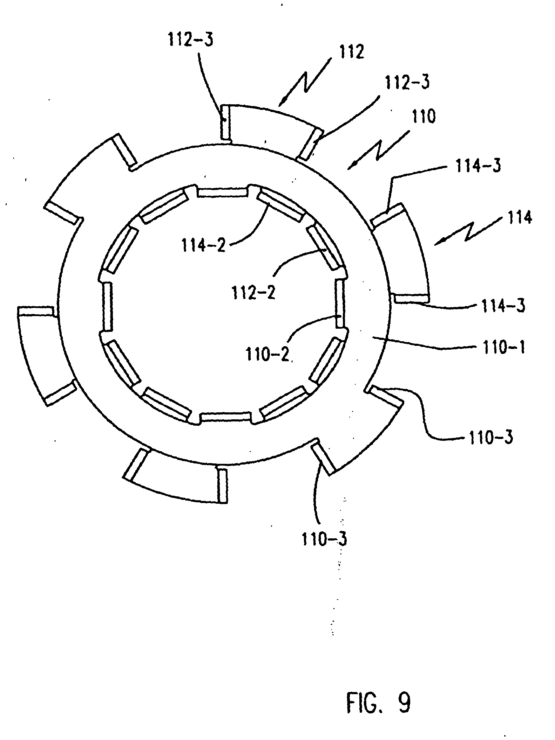

Fig. 9 zeigt eine Unteransicht einer Baugruppe, die drei vormontierte Flußleiteinheiten gemäß einer sechsten Ausführungsform der Erfindung umfaßt. Die Ausführungsform ist ähnlich wie die Ausführungsform der Fig. 10, wobei jedoch die Anzahl der Spulenkerne jeder Flußleiteinheit verdoppelt ist. Die am weitesten innen liegende Flußleiteinheit ist mit 110 bezeichnet und die weiter außen liegenden Flußleiteinheiten sind mit 112 und 114 bezeichnet. Bei dieser sechsten Ausführwngsform weist jede Flußleiteinheit einen ringförmigen Flußkonzentratorabschnitt 110-1, 112-1, 114-1, vier Flußaufnehmerabschnitte 110-2, 112-2, 114-2 und vier Spulenkerne 110-3, 112-3, 114-3 auf. Die länglichen Spulenkerne 110-3, 112-3, 114-3 sind, anders als bei den vorhergehenden Ausführungsformen, mit ihrer Längserstreckung nicht in Umfangsrichtung, sondern radial zur Rotationsachse des Permanentmagneten des Elektromotors angeordnet. Diese Ausführungsform kann ebenfalls Vorteil bei der Herstellung der Flußleiteinheiten haben, wie sich aus Fig. 14 ergibt. Im übrigen gilt für die vierte Ausführungsform das oben in bezug auf die zweite Ausführungsform gesagte.

Fig. 10 zeigt ein Stanzbiegeteil, das zur Herstellung z. B. der Flußleiteinheit 110 der sechsten Ausführungsform der Erfindung verwendet werden kann, die in Fig. 13 gezeigt ist. In Fig. 14 ist die Flußleiteinheit 110 mit dem ringförmigen Flußkonzentratorabschnitt 110-1, den vier Flußaufnehmerabschnitten 110-2 und den vier Spulenkernen 110-3 vor dem Stanz-Biegevorgang gezeigt. Wie aus Fig. 14 ersichtlich, kann die Flußleiteinheit mit einer optimalen Materialausnutzung hergestellt werden.

Fig. 11 zeigt eine schematische Längsschnittdarstellung durch den Elektromotor gemäß einer siebten Ausführungsform der Erfindung, die ähnlich wie die Darstellung der Fig. 2 ist, wobei in Fig. 11 der Rotor und die Rotorlager nicht gezeigt sind. In Fig. 11 ist eine erste Flußleiteinheit mit 114 bezeichnet, eine zweite Flußleiteinheit mit 116 bezeichnet und eine dritte Flußleiteinheit mit 118 bezeichnet. Die Ausführungsform der Fig. 11 unterscheidet sich von den vorhergehenden Ausführungsformen darin, daß die Spulenkerne, z.B. 120, mit dem Eisenrückschluß 122 einteilig ausgebildet sind. Bei dieser siebten Ausführungsform werden also zunächst die Spulenkerne, z.B. 120, einteilig mit dem Eisenrückschluß 122 ausgebildet, anschließend werden die Spulen 124 auf die Spulenkerne aufgebracht, bevor der Eisenrückschluß 122, zusammen mit den Spulen 124, mit den Flußleiteinheiten 114, 116, 118 zusammengefügt wird. Im übrigen gilt das für die erste Ausführungsform mit Bezug auf Fig. 2 gesagte.

Bei Auslegung der Rotorwelle 14 aus einem magnetisch nicht leitenden Material oder durch eine andere geeignete magnetische Entkopplung zwischen dem Stator und dem Rotor ist es möglich, die Lagersitze 66, 68 für die Rotorwellenlager 60, 62 in den Magnetkreis zu integrieren und somit zusätzliche Motorflansche überflüssig zu machen. Bei der bevorzugten Ausführungsform der Erfindung werden die Lagersitze in den äußeren Flußaufnehmer 24 und den Rückschlußring 58 integriert.

Bezugszeichenliste

| 10 | Rotor |
|---|---|
| 12 | Stator |
| 14 | Rotorwelle |
| 16 | EisenrückschluBkörper |
| 18 | Permanentmagnet |
| 20, 22 | Magnetpole |
| 24, 26, 28 | Flußleiteinheit |
| 30, 32, 34 | Flußkonzentratorabschnitte |
| 36, 38, 40 | Flußaufnehmerabschnitte |
| 42, 44 | magnetischer Werkstoff |
| 46, 48, 50 | Spulenkern |
| 52, 54, 56 | Ringspule |
| 58 | Eisenrückschluß |
| 60, 62 | Lager |
| 64 | Bohrungen |
| 66, 68 | Lagersitz |
| 70 | Bohrungen |
| 72, 74 | Öffnung |
| 76 | Bohrungen |
| 78, 80, 82 | Öffnung |
| 84 | Bohrungen |
| 86, 88, 90 | Flußleiteinheiten |
| 86-1, 88-1, 90-1 | Flußkonzentratorabschnitte |
| 86-2, 88-2, 90-2 | Flußaufnehmerabschnitte |
| 86-3, 88-3, 90-3 | Spulenkerne |
| 92, 94, 96 | Flußleiteinheiten |
| 92-1, 94-1, 96-1 | Fluakonzentratorabschnitte |
| 92-2, 94-2, 96-2 | Flußaufnehmerabschnitte |
| 92-3, 94-3, 96-3 | Spulenkerne |
| 98, 100, 102 | Flußleiteinheiten |
| 98-1, 100-1, 102-1 | FluAkonzentratorabschnitte |
| 98-2, 100-2, 102-2 | Flußaufnehmerabschnitte |
| 98-3, 100-3, 102-3 | Spulenkerne |
| 104-1 , 104-2, 106-1, 106-2, 108-1, 108-2 | Flußleitstücke |

| 104-11, 104-21, 106-11, 106-21, 108-11, 108-21 | Flußkonzentratorabschnitte |
| 104-12, 104-22, 106-12, 106-22, 108-12, 108-22 | Flußaufnehmerabschnitte |
| 104-13, 104-23, 106-13, 106-23, 108-13, 108-23 | Spulenkerne |
| 110, 112, 114 | Flußleiteinheiten |
| 110-1, 112-1, 114-1 | Flußkonzentratorabschnitte |
| 110-2, 112-2, 114-2 | Flußaufnehmerabschnitte |
| 110-3, 112-3,114-3 | Spulenkerne |
| 114, 116, 118 | Flußleiteinheiten |
| 120 | Spulenkern |
| 122 | Eisenrückschluß |
| 124 | Spulen |

## Patentansprüche

1. Elektronisch kommutierter Elektromotor mit einem mehrpoligen Permanentmagneten (18), mehreren Flußleiteinheiten (24, 26, 28), die wenigstens jeweils einen Flußaufnehmerabschnitt (36, 38, 40) und einen Flußkonzentratorabschnitt (30, 32, 34) aufweisen, wobei jede Flußleiteinheit (24, 26, 28) einen radialen Magnetfluß von dem Permanentmagneten (18) aufnimmt und in einen transversalen Magnetfluß umlenkt, und mit mehreren Spulen (52, 54, 56), die jeweils den Flußleiteinheiten zugeordnet und achsparallel zu dem Permanentmagneten (18) angeordnet sind, wobei die Flußleiteinheiten (24, 26, 28) derart ineinander verschachtelt sind, daß die Flußaufnehmerabschnitte (36) einer Flußleiteinheit (24) durch Ausnehmungen (72, 78) in einer anderen Flußleiteinheit (26, 28) geführt sind..

2. Elektromotor nach Anspruch 1, **dadurch gekennzeichnet, daß** der Permanentmagnet ringförmig oder segmentiert auf einem Rotor (10) angeordnet ist.

3. Elektromotor nach Anspruch 2, **dadurch gekennzeichnet, daß** der Rotor (10) einen Eisenrückschlußkörper (16) aufweist, auf dem der Permanentmagnet (18) angeordnet ist.

4. Elektromotor nach einem der vorangehenden Ansprüche, **dadurch gekennzeichnet, daß** die Spulen (52, 54, 56) auf Spulenkernen (46, 48, 50) angeordnet sind, welche sich achsparallel zu dem Permanentmagneten (18) erstrekken und mit dem Flußkonzentratorabschnitt (30, 32, 34) einer zugehörigen Flußleiteinheit (24, 26, 28) gekoppelt sind.

5. Elektromotor nach Anspruch 4, **dadurch gekennzeichnet, daß** die Spulenkerne an ihrem dem Flußkonzentratorabschnitt (30, 32, 34) gegenüberliegenden Ende mit einem Eisenrückschluß (58) gekoppelt sind.

6. Elektromotor nach Anspruch 4 oder 5, **dadurch gekennzeichnet, daß** die Flußleiteinheiten (24, 26, 28) koaxial derart übereinander angeordnet sind, daß die Flußaufnehmerabschnitte (36) und Spulenkerne (46) einer außen liegenden Flußleiteinheit (24) durch Ausnehmungen (72, 78) in einer innenliegenden Flußleiteinheit (26, 28) geführt sind.

7. Elektromotor nach einem der vorangehenden Ansprüche, **dadurch gekennzeichnet, daß** der Flußkonzentratorabschnitt (30, 32, 34) einer Flußleiteinheit (24, 26, 28) einen Ring oder einen Ringabschnitt bildet, der im wesentlichen konzentrisch zu dem Permenentmagneten (18) ist.

8. Elektromotor nach einem der vorangehenden Ansprüche, **dadurch gekennzeichnet, daß** die Flußaufnehmerabschnitte (36, 38, 40) an dem inneren oder äußeren Umfang eines zugehörigen Flußkonzentratorabschnittes (30, 32, 34) angeordnet sind und sich im wesentlichen parallel zu der Rotationsachse des Permanentmagneten (18), in der Nähe der Pole des Permanentmagneten (18) erstrecken.

9. Elektromotor nach einem der vorangehenden Ansprüche, **dadurch gekennzeichnet, daß** für jede Phase des Elektromotors eine Flußleiteinheit (24, 26, 28) vorgesehen ist.

10. Elektromotor nach einem der vorangehenden Ansprüche, **dadurch gekennzeichnet, daß** für jede Phase des Elektromotors eine oder vier Spulen (52, 54, 56) vorgesehen sind.

11. Elektromotor nach einem der vorangehenden Ansprüche, **dadurch gekennzeichnet, daß** eine außen liegende Flußleiteinheit (24) und der Rückschluß (58) jeweils Lager (60, 62) zur Lagerung einer Rotorwelle (14) aufnehmen.

12. Elektromotor nach einem der vorangehenden Ansprüche, **dadurch gekennzeichnet, daß** jede Flußleiteinheit (24, 26, 28) mehrere, insbesondere zwei bis zwölf Flußaufnehmerabschnitte (36, 38, 40) aufweist, die in regelmäßigen Abständen auf einem zum Permanentmagneten (18) konzentrischen Kreis liegen.

13. Elektromotor nach einem der vorangehenden Ansprüche, **dadurch gekennzeichnet, daß** er als Innenläufermotor oder Außenläufermotor konfiguriert ist.

14. Elektromotor nach einem der vorangehenden Ansprüche, **dadurch gekennzeichnet, daß** die Flußaufnehmerabschnitte (36, 38, 40) nach Art von Klauen am inneren Umfang eines zugehörigen Flußkonzentratorabschnitts (30, 32, 34) angebracht sind.

15. Elektromotor nach Anspruch 12, **dadurch gekennzeichnet, daß** die Flußaufnehmerabschnitte (36, 38, 40) und die Flußkonzentratorabschnitte (30, 32, 34) einen Winkel von ungefähr 90° einschließen.

16. Elektromotor nach einem der vorangehenden Ansprüche, **dadurch gekennzeichnet, daß** die Flußaufnehmerabschnitte (36, 38, 40) im wesentlichen zwischen den Polen des Permanentmagneten (18) und den Spulen (52, 54, 56) zu liegen kommen.

17. Elektromotor nach einem der vorangehenden Ansprüche, **dadurch gekennzeichnet, daß** er ein elektronisch kommutierter Gleichstrommotor ist.

**Claims**

1. An electronically commutated electric motor having a multi-pole permanent magnet (18), a plurality of flux guide units (24, 26, 28) each of which comprises at least one flux collector section (36, 38, 40) and one flux concentrator section (30, 32, 34), whereby each flux guide unit (24, 26, 28) picks up a radial magnetic flux from the permanent magnet (18) and redirects it into a transversal magnetic flux, and having a plurality of coils (52, 54, 56) each of which is allocated to a flux guide unit and is arranged axially parallel to the permanent magnet (18), whereby the flux guide units (24, 26, 28) are nested within each other in such a way that the flux collector sections (36) of a flux guide unit (24) pass through cutouts (72, 78) in another flux guide unit (26, 28).

2. An electric motor according to claim 1, **characterized in that** the permanent magnet is arranged in an annular or segmented form on the rotor (10).

3. An electric motor according to claim 2, **characterized in that** the rotor (10) comprises a back yoke (16) on which the permanent magnet (18) is arranged.

4. An electric motor according to one of the above claims, **characterized in that** the coils (52, 54, 56) are arranged on coil cores (46, 48, 50) which extend axially parallel to the permanent magnet (18) and are coupled to the flux concentrator section (30, 32, 34) of an associated flux guide unit (24, 26, 28).

5. An electric motor according to claim 4, **characterized in that** the coil cores are coupled with a back iron yoke (58) at the end lying opposite the flux concentrator section (30, 32, 34).

6. An electric motor according to claim 4 or 5, **characterized in that** the flux guide units (24, 26, 28) are arranged coaxially one on top of the other in such a way that the flux collector sections (36) and coil cores (46) of an outer flux guide unit (24) pass through cutouts (72, 78) in an inner flux guide unit (26, 28).

7. An electric motor according to one of the above claims, **characterized in that** the flux concentrator section (30, 32, 34) of a flux guide unit (24, 26, 28) forms a ring or a ring section which is essentially concentric to the permanent magnet (18).

8. An electric motor according to one of the above claims, **characterized in that** the flux collector sections (36, 38, 40) are arranged at the inner or outer circumference of an associated flux concentrator section (30, 32, 34) and extend essentially parallel to the rotational axis of the permanent magnet (18), in the vicinity of the poles of the permanent magnet (18).

9. An electric motor according to one of the above claims, **characterized in that** a flux guide unit (24, 26, 28) is provided for each phase of the electric motor.

10. An electric motor according to one of the above claims, **characterized in that** one or four coils (52, 54, 56) are provided for each phase of the electric motor.

11. An electric motor according to one of the above claims, **characterized in that** an outer flux guide unit (24) and the back iron yoke (58) each accommodate bearings (60, 62) to support a rotor shaft (14).

12. An electric motor according to one of the above claims, **characterized in that** each flux guide unit (24, 26, 28) comprises several, particularly two to twelve, flux collector sections (36, 38, 40) which are regularly spaced in a circle concentric to the permanent magnet (18).

13. An electric motor according to one of the above claims, **characterized in that** it is configured as an inner rotor motor or an outer rotor motor.

14. An electric motor according to one of the above claims, **characterized in that** the flux collector sections (36, 38, 40) are attached to the inner circumference of an associated flux concentrator section (30, 32, 34) in the manner of claws.

15. An electric motor according to claim 12, **characterized in that** the flux collector sections (36, 38, 40) and the flux concentrator sections (30, 32, 34) form an angle of approximately 90°.

16. An electric motor according to one of the above claims, **characterized in that** the flux collector sections (36, 38, 40) essentially end up lying between the poles of the permanent magnet (18) and the coils (52, 54, 56).

17. An electric motor according to one of the above claims, **characterized in that** it is an electronically commutated DC motor.

**Revendications**

1. Moteur électrique à commutation électronique avec un aimant permanent multipolaire (18), avec plusieurs unités conductrices de flux (24, 26, 28) comportant au moins chacune une section d'absorbeurs de flux (36, 38, 40) et une section de concentrateurs de flux (30, 32, 34), chaque unité conductrice de flux (24, 26, 28) absorbant un flux magnétique radial à partir de l'aimant permanent (18) et le renversant en un flux magnétique transversal, et avec plusieurs bobines (52, 54, 56) qui sont respectivement associées aux unités conductrices de flux et disposées en parallèle à l'axe des aimants permanents (18), les unités conductrices de flux (24, 26, 28) étant emboîtées l'une dans l'autre de façon à ce que les sections d'absorbeurs de flux (36) d'une unité conductrice de flux (24) soient guidées à travers des évidements (72, 78) dans une autre unité conductrice de flux (26, 28).

2. Moteur électrique selon la revendication 1, **caractérisé en ce que** l'aimant permanent est disposé sous une forme annulaire ou segmentée sur un rotor (10).

3. Moteur électrique selon la revendication 2, **caractérisé en ce que** le rotor (10) comporte un corps en fer (16) sur lequel l'aimant permanent (18) est disposé.

4. Moteur électrique selon l'une quelconque des revendications précédentes, **caractérisé en ce que** les bobines (52, 54, 56) sont disposées sur des noyaux de bobine (46, 48, 50) qui s'étendent à la parallèle de l'axe de l'aimant permanent (18) et qui sont couplés avec la section de concentrateurs de flux (30, 32, 34) d'une unité conductrice de flux associée (24, 26, 28).

5. Moteur électrique selon la revendication 4, **caractérisé en ce que** sur leur extrémité opposée à la section de concentrateurs de flux (30, 32, 34), les noyaux de bobine sont couplés à une extrémité en fer (58).

6. Moteur électrique selon la revendication 4 ou 5, **caractérisé en ce que** les unités conductrices de flux (24, 26, 28) sont superposées de façon coaxiale de manière à ce que les sections d'absorbeurs de flux (36) et les noyaux de bobine (46) d'une unité conductrice de flux externe (24) soient guidées à travers des évidements (72, 78) dans une unité conductrice de flux interne (26, 28).

7. Moteur électrique selon l'une quelconque des revendications précédentes, **caractérisé en ce que** la section de concentrateurs de flux (30, 32, 34) d'une unité conductrice de flux (24, 26, 28) forme un anneau ou une section annulaire qui est sensiblement concentrique à l'aimant permanent (18).

8. Moteur électrique selon l'une quelconque des revendications précédentes, **caractérisé en ce que** les sections d'absorbeurs de flux (36, 38, 40) sont disposées sur la périphérie intérieure ou extérieure d'une section de concentrateurs de flux associée (30, 32, 34) et s'étendent sensiblement à la parallèle de l'axe de rotation de l'aimant permanent (18), à proximité des pôles de l'aimant permanent (18).

9. Moteur électrique selon l'une quelconque des revendications précédentes, **caractérisé en ce qu'**on a prévu une unité conductrice de flux (24, 26, 28) pour chaque phase du moteur électrique.

10. Moteur électrique selon l'une quelconque des revendications précédentes, **caractérisé en ce qu'**on a prévu une ou quatre bobines (52, 54, 56) pour chaque phase du moteur électrique.

11. Moteur électrique selon l'une quelconque des revendications précédentes, **caractérisé en ce qu'**une unité conductrice de flux externe (24) et l'extrémité en fer (58) réceptionnent chacune des paliers (60, 62) pour loger un arbre du rotor (14).

12. Moteur électrique selon l'une quelconque des revendications précédentes, **caractérisé en ce que** chaque unité conductrice de flux (24, 26, 28) comporte plusieurs, notamment de deux à douze sections d'absorbeurs de flux (36, 38, 40), qui sont situées à intervalles réguliers sur un cercle concentrique par rapport à l'aimant permanent (18).

13. Moteur électrique selon l'une quelconque des revendications précédentes, **caractérisé en ce qu'**il est configuré en tant que moteur à induit interne ou que moteur à induit externe.

14. Moteur électrique selon l'une quelconque des revendications précédentes, **caractérisé en ce que** les sections d'absorbeurs de flux (36, 38, 40) sont montées à la façon de griffes sur la périphérie intérieure d'une section associée de concentrateurs de flux (30, 32 34).

15. Moteur électrique selon la revendication 12, **caractérisé en ce que** les sections d'absorbeurs de flux (36, 38, 40) et les sections de concentrateurs de flux (30, 32, 34) forment un angle d'environ 90°.

16. Moteur électrique selon l'une quelconque des revendications précédentes, **caractérisé en ce que** les sections d'absorbeurs de flux (36, 38, 40) viennent s'appliquer sensiblement entre les pôles des aimants permanents (18) et les bobines (52, 54, 56).

17. Moteur électrique selon l'une quelconque des revendications précédentes, **caractérisé en ce qu'**il est un moteur à courant continu à commutation électronique.

B-B'

FIG. 1

A-A

FIG. 2

FIG. 3

FIG. 4

FIG. 5

FIG. 6

FIG. 7

FIG. 8

FIG. 9

FIG. 10

FIG. 11